# EUROPÄISCHE PATENTSCHRIFT

(11) **EP 1 257 389 B1**
(45) Veröffentlichungstag und Bekanntmachung des Hinweises auf die Patenterteilung: **16.07.2008**
(21) Anmeldenummer: 01900448.0
(22) Anmeldetag: 16.01.2001
(51) Int. Cl.: B25J 15/06, B65G 47/91, B66C 1/02

(54) **VAKUUMHANDHABUNGSGERÄT**
VACUUM HANDLING DEVICE
APPAREIL DE MANUTENTION A ASPIRATION

(30) Priorität: 26.02.2000 DE 10009108
(43) Veröffentlichungstag der Anmeldung: 20.11.2002
(73) Patentinhaber: J. Schmalz GmbH, 72293 Glatten (DE)
(72) Erfinder: SCHMALZ, Kurt, 72280 Dornstetten (DE); EISELE, Thomas, 78737 Fluorn-Winzeln (DE); GEISSLER, Dieter, 75337 Enzklösterle (DE)
(74) Vertreter: Dreiss, Fuhlendorf, Steimle & Becker
(86) Internationale Anmeldenummer: PCT/EP2001/000405
(87) Internationale Veröffentlichungsnummer: WO 2001/062447

(56) Entgegenhaltungen:
- EP-A- 0 226 706
- DE-A- 3 047 717
- DE-A- 3 801 666
- US-A- 4 787 662
- US-A- 5 749 614

## Beschreibung

Die Erfindung betrifft ein Vakuumhandhabungsgerät mit den Merkmalen des Oberbegriffs des Anspruchs 1.

Aus der DE 37 41 091 A1, der DD 209 424, der EP 0 267 874 A1, der DE 30 47 717 A1, der GB 2 062 577 A, der DE 33 42 424 A1, der US 4,787,812 und der FR 2 291 172 A sind Handhabungsgeräte bekannt, mit denen mittels Vakuum Werkstücke angehoben werden können. Diese Geräte weisen einen Saugkasten auf, der auf der dem Werkstück zugewandten Seite mittels einer Ansaugeinheit verschlossen ist. Diese Ansaugeinheit besteht aus einem Lochblech und einer Saugmatte, die zueinander korrespondierende Öffnungen aufweisen. Wird die Ansaugeinheit vom Werkstück abgedeckt, dann wird das Werkstück vom Vakuumhandhabungsgerät angesaugt, und es kann transportiert werden. Probleme tauchen jedoch dann auf, wenn die Ansaugeinheit nicht vollständig vom Werkstück bzw. von den Werkstücken abgedeckt wird, so dass über diese nicht abgedeckten Bereiche so viel Luft angesaugt wird, dass kein ausreichend hoher Unterdruck erzeugt werden kann, um die Werkstücke anzusaugen.

Aus der EP-A-0 226 706 ist eine Saugspannplatte bekannt, mit der z.B. Türinnenverkleidungen montiert werden können. Die Saugspannplatte weist an der Saugseite zwei Zellgummimatten unterschiedlicher Härte auf. Diese Zellgummimatten weisen zueinander fluchtende und gleich große Strömungsöffnungen für die Saugluft auf. Die US-A-4,787,662 offenbart ein Unterdruckgreifwerkzeug welches einen Träger und eine gummiartige Auflage aufweist. Wird bei diesen beiden Vorrichtungen die Saugmatte verquetscht, dann besteht eine große Gefahr, dass die Saugöffnungen verschlossen werden.

Der Erfindung liegt daher die Aufgabe zugrunde, ein Vakuumhandhabungsgerät der eingangs genannten Art so weiterzubilden, dass Werkstücke auch dann mit Sicherheit angesaugt werden können, wenn die Ansaugeinheit nur zum Teil abgedeckt ist und auch dann, wenn die Ansaugmatte teilweise verquetscht ist.

Diese Aufgabe wird bei einem Vakuumhandhabungsgerät der gelöst, das die Merkmale des Anspruchs 1 aufweist.

Beim Aufsetzen der Saugmatte auf den anzusaugenden Gegenstand führt eine örtlich begrenzte Verquetschung der Saugmatte nicht zu einem Verschluss der Ansaugöffnungen, da die Querschnitte der Ansaugöffnungen im verquetschten Bereich relativ groß sind. Dennoch besitzt die Ansaugmatte einen hinreichend großen Strömungswiderstand, da die Kanäle der Zwischenmatte, die mit den Ansaugöffnungen der Ansaugmatte kommunizieren, relativ klein sind. Diese Kanäle werden jedoch nicht verquetscht, da sie sich nicht im unmittelbaren Berührungsbereich befinden, sondern in einer Zwischenmatte vorgesehen sind.

Dadurch, dass die Saugmatte aus einem geschlossenzelligen Schaumstoff besteht und deren Ansaugöffnungen und/oder die Öffnungen des Saugbleches einen Strömungswiderstand darstellen, kann im Saugkasten dennoch ein Unterdruck aufgebaut werden, selbst wenn die Ansaugeinheit nicht vollständig von einem oder mehreren Werkstücken abgedeckt ist. Zwar wird über die nicht abgedeckten Öffnungen Luft angesaugt, jedoch ist die durch diese Öffnungen einströmende Menge geringer als die vom Unterdruckgebläse abgesaugte Luftmenge. Die Öffnungen im Saugblech besitzen z.B. durch ihren geringen Öffnungsquerschnitt einen definierten Strömungswiderstand. Die Ansaugöffnungen in der Saugmatte können z.B. ebenfalls über den Querschnitt hinsichtlich ihres Strömungswiderstandes eingestellt werden, was jedoch auch über die Länge der Ansaugöffnungen erfolgen kann. Durch den sandwichartigen Aufbau mit Zwischenmatte und Saugmatte wird auch eine Aussteifung der Ansaugeinheit erzielt, so dass keine Gefahr mehr durch seitliches Kollabieren besteht. Die Ansaugeinheit bleibt aber nach wie vor so elastisch, dass sie sich an unebene Gegenstände anschmiegen kann, so dass diese optimal angesaugt werden können.

Bei einer Weiterbildung ist vorgesehen, dass die Ansaugeinheit an ihrem Umfang einen zusätzlichen elastischen Rand aufweist. Dieser Rand hat die Aufgabe, dass auch über den Saugkasten, d.h. die Ansaugeinheit hinaus, überstehende Werkstücke problemlos angesaugt und festgehalten werden können. Dies ist auch der Fall, wenn sich die Werkstücke beim Anheben durchbiegen, da der elastische Rand nachgibt und dem Werkstück folgt. Ein Abschälen des Werkstücks von der Ansaugeinheit wird dadurch verhindert.

Bei Ausführungsformen ist vorgesehen, dass der Rand ein Schaumstoff oder eine Gummilippe ist, die über die freie Ebene der Ansaugeinheit vorsteht. Beim Aufsetzen der Ansaugeinheit auf die Oberfläche des Werkstücks wird entweder der Schaumstoff komprimiert oder die Gummilippe zurückgebogen, so dass der elastische Rand unter Vorspannung auf der Oberfläche des Werkstücks aufliegt. Weicht dann das Werkstück z.B. aufgrund einer Durchbiegung aus, kann der Rand problemlos dem Werkstück folgen und liegt dann nach wie vor dichtend am Werkstück an.

Der Rand ist erfindungsgemäß mittels einer Klemmung oder einer Verklebung an der Ansaugeinheit oder am Saugkasten befestigt. Die Befestigung mittels einer Klemmung hat den wesentlichen Vorteil, dass im Reparaturfalle der Rand einfach gelöst und durch einen neuen ausgetauscht werden kann. Die Verklebung hat den Vorteil, dass hierfür keine speziellen Klemmvorrichtungen erforderlich sind und die Verklebung schnell und einfach erfolgen kann. Durch geeignete Werkzeuge kann ein angeklebter Rand ebenfalls rückstandslos entfernt werden.

Bei einer Ausführungsvariante ist vorgesehen, dass die Ansaugeinheit an den Saugkasten angeklebt oder an diesen festgeklemmt ist. Auch hier bietet die Verklemmung den Vorteil, dass die Ansaugeinheit zerstörungsfrei entfernt und gegebenenfalls gegen eine an andere Werkstücke angepasst Ansaugeinheit ausgetauscht werden kann. Ist der Wechsel zwischen unterschiedlichen Ansaugeinheiten nicht erforderlich, dann werden die Ansaugeinheiten bevorzugt an die Unterseite des Saugkastens angeklebt.

Bei einem bevorzugten Ausführungsbeispiel ist das Saugblech topfförmig ausgebildet und weist einen umlaufenden Rand auf, über welchen das Saugblech am Saugkasten festgeklemmt ist. Die topfförmige Gestalt des Saugbleches hat den wesentlichen Vorteil, dass seitliche Klemmvorrichtungen sich nicht als störend auswirken, da aufgrund der Topfform das Saugblech über diese Klemmvorrichtungen in Richtung des Werkstücks vorsteht. Außerdem wird durch die Topfform das Volumen des Saugkastens und dadurch der Vakuumspeicher vergrößert. Schließlich hat die Topfform noch den Vorteil, dass an deren Seitenfläche, d.h. an deren Umfang, Ränder zum seitlichen Abdichten des Saugraumes angebracht werden können.

Eine Ausführung sieht vor, dass die Saugplatte als Folie ausgebildet ist. Diese Folie hat zum einen den Vorteil, dass sie relativ flexibel ist, zum anderen besteht der Vorteil, dass sie relativ einfach mit den gewünschten Öffnungen, insbesondere Löchern, versehen werden kann, so dass auf relativ einfache Art und Weise der gewünschte Strömungswiderstand hergestellt werden kann. Besteht die Saugplatte aus einer Folie, dann kann sich die Ansaugeinheit außerdem an unebene Gegenstände anlegen und diese anheben. Außerdem wirkt sich das Durchbiegen von plattenförmigen Gegenständen nicht so gravierend aus wie bei starren Ansaugeinheiten, da bei der flexiblen Ansaugeinheit gemäß dieser Ausführungsform eine Anpassung an die durchgebogene Form des Werkstücks möglich ist. Die Gefahr des Abschälens des Werkstücks ist wesentlich vermindert.

Bei einer Weiterbildung ist vorgesehen, dass die Saugplatte auf ihrer Rückseite mittels einer luftdurchlässigen elastischen Matte abgestützt ist. Diese Matte dient zum einen zur Versteifung der Ansaugeinheit, falls dies erforderlich ist, zum anderen kann mit der Matte der Strömungswiderstand auf gewünschte Werte eingestellt werden.

Erfindungsgemäß ist die Saugmatte mehrteilig ausgebildet und ein Teil wird von einer luftundurchlässigen elastischen Matte gebildet, die Luftkanäle aufweist. Auf diese Weise kann über die Dimensionen dieser Luftkanäle der Strömungswiderstand exakt eingestellt werden, wobei aufgrund der elastischen Ausführung der Saugmatte ein optimales Anliegen an das Werkstück möglich ist.

Um das Ansaugen von Falschluft zu vermeiden, ist bei einer Weiterbildung die Umfangsfläche der Matte luftdicht versiegelt.

Eine weitere Variante sieht vor, dass die Saugmatte Ansaugöffnungen aufweist, deren Querschnitte sich in Richtung des bzw. der Werkstücke erweitern. Auf diese Weise werden relativ große, an der Oberfläche des Werkstücks anliegende Saugkammern geschaffen, wobei sich die Saugkammern in relativ enge Saugkanäle verjüngen, die den gewünschten Querschnitt besitzen, wodurch der erforderliche Strömungswiderstand eingestellt wird. Vorteilhaft erweitern sich die Ansaugquerschnitte tulpenförmig.

Bei einer Variante ist vorgesehen, dass die Saugmatte einen über das Saugblech vorstehenden umlaufenden Rand aufweist, der das Abschälen von angesaugten Blechen auf einfache Art und Weise verhindert.

Vorteilhaft weisen die Öffnungen des Saugbleches bzw. die Ansaugöffnungen der Saugmatte ein regelmäßiges Raster z.B. ein Wabenmuster auf oder sind auf die Anordnung der Werkstücke abgestimmt.

Bei einer Weiterbildung ist vorgesehen, dass zwischen der Zwischenmatte und der Saugmatte ein Sandwichblech angeordnet ist. Durch dieses Sandwichblech wird die Aussteifung gegen seitliches Kollabieren noch weiter erhöht, so dass gewährleistet ist, dass über die Strömungskanäle (und zwar auch die in Randbereich liegenden) auf jeden Fall Luft abgesaugt werden kann.

Bevorzugt erstreckt sich das Sandwichblech nur über einen Teil der Querschnittsfläche der Zwischenmatte, insbesondere ist das Sandwichblech streifenförmig ausgebildet und im Randbereich der Zwischenmatte oder von Aussparungen angeordnet. Soll in den Greifer ein Erkennungssystem, z.B. mit Kameras oder dergleichen integriert werden, so wird die Saugmatte mit Aussparungen versehen, durch welche hindurch das Erkennungssystem die gegenstände erkennen kann.

Eine alternative Ausgestaltung der Erfindung sieht vor, dass das Sandwichblech streifenförmig ausgebildet und die Streifen mit Abstand zueinander angeordnet sind.

Eine Variante der Erfindung sieht vor, dass das Sandwichblech sich über die gesamte Querschnittsfläche der Zwischenmatte erstreckt.

Bei einer Weiterbildung der Erfindung sind mehrere Zwischenmatten und Sandwichbleche vorgesehen und die Ansaugeinheit besitzt einen mehrschichtigen Sandwichaufbau.

Eine Weiterbildung sieht vor, dass die Strömungsveränderungsmittel eine Vielzahl von Öffnungen, von Strömungswiderständen und/oder von Strömungsventilen sind. Dabei können die Strömungsventile einzeln oder in Gruppen ansteuerbar sein. Insbesondere bei der Verwendung der Erfindung an einem Robotersystem können auf diese Weise die saugenden Bereiche gezielt definiert und beliebig verändert werden. Außerdem kann der Strömungswiderstand zwischen Null und Vollsperrung eingestellt und verändert werden.

Weitere Vorteile, Merkmale und Einzelheiten der Erfindung ergeben sich aus den Unteransprüchen sowie der nachfolgenden Beschreibung, in der unter Bezugsnahme auf die Zeichnung besonders bevorzugte Ausführungsbeipiele im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Fig. 1:: eine Seitenansicht (teilweise geschnitten) einer Ausführungsform des erfindungsgemäßen Vakuumhandhabungsgeräts;
- Fig. 2:: eine Ansicht II gemäß Fig. 1;
- Fig. 3:: eine Draufsicht auf das Handhabungsgerät gemäß Fig. 1;
- Fig. 4:: eine Draufsicht auf eine Ausführungsform eines Saugblechs;
- Fig. 5:: eine vergrößerte Wiedergabe V einer Ecke gemäß Fig. 4;
- Fig. 6:: eine Draufsicht auf eine Ausführungsform einer Saugmatte;
- Fig. 7:: eine vergrößerte Wiedergabe VII einer Ecke gemäß Fig. 6; und
- Fig. 8:: einen Querschnitt durch einen Saugkasten mit daran befestigter Saugeinheit.

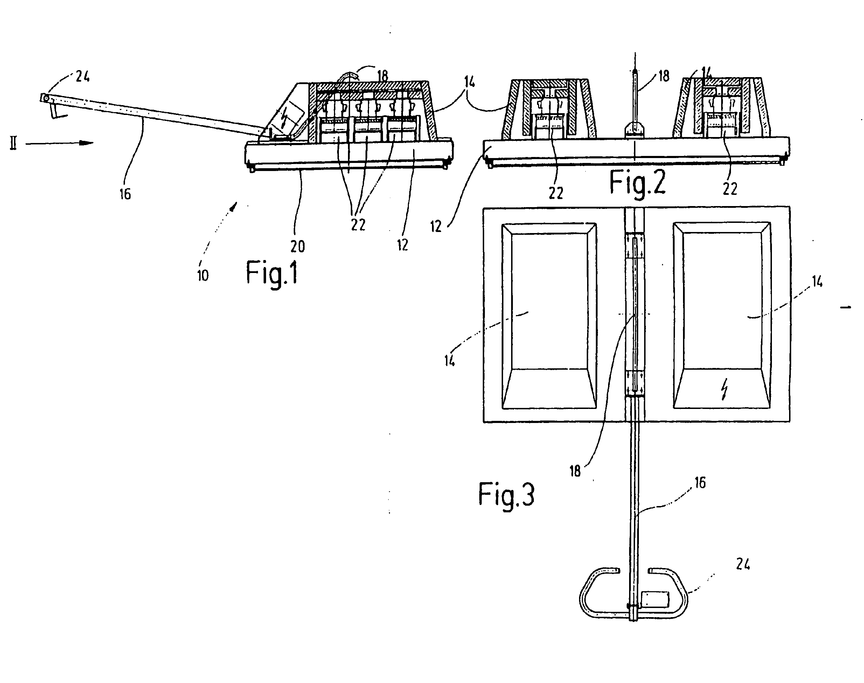

Die Fig. 1 zeigt ein Ausführungsbeispiel des erfindungsgemäßen Vakuumhandhabungsgeräts 10, welches im Wesentlichen einen Saugkasten 12, eine Haube 14, eine Handhabungseinrichtung 16, eine Aufhängevorrichtung 18 sowie eine Ansaugeinheit 20 aufweist. Unter der Haube 14 sind mehrere Unterdruckgebläse 22 vorgesehen, mit denen im Saugkasten 12 ein Unterdruck erzeugt wird. Wie aus Fig. 2 ersichtlich, sind auf dem Saugkasten 12 zwei Hauben 14 vorgesehen, so dass der Unterdruck mit insgesamt sechs Unterdruckgebläsen 22 erzeugt wird. Die Ansteuerung der Gebläse 22 erfolgt mittels der Handhabungseinrichtung 16, an deren Handgriff 24 entsprechende Steuerelemente vorgesehen sind. Mit der Handhabungseinrichtung 16 wird das Vakuumhandhabungsgerät 10 außerdem auf die zu handhabenden Werkstücke (nicht dargestellt) aufgesetzt, d.h. das Gerät 10 wird positioniert. Das Ansaugen und Lösen der Werkstücke erfolgt über die bereits erwähnten Steuerelemente.

Zum Anheben des Vakuumhandhabungsgeräts 10 ist die Aufhängevorrichtung 18 vorgesehen, die z.B. an ein entsprechendes Hebegerät, z.B. einen Kettenzug, angehängt wird. Die Vorrichtung kann jedoch auch an einen Roboterarm angeflanscht werden.

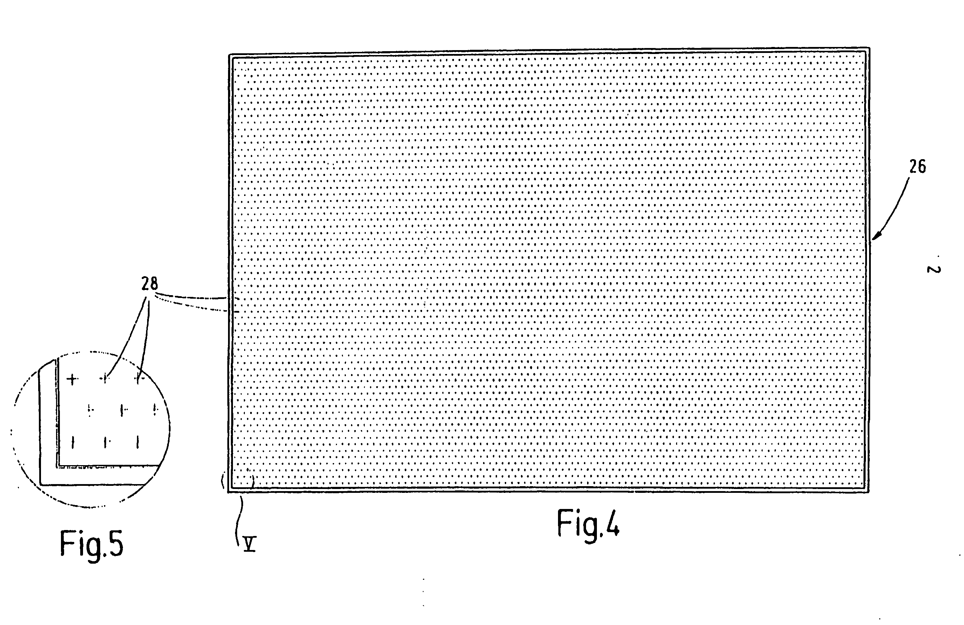

Die Ansaugeinheit 20 weist im Wesentlichen ein Saugblech 26 auf, welches mit einer Vielzahl von Öffnungen 28 versehen ist (Fig. 4 und 5). Diese Öffnungen 28 besitzen einen kleinen Querschnitt und stellen somit einen relativ großen Strömungswiderstand dar. Vorteilhaft sind die Öffnungen 28 in einem regelmäßigen Muster angeordnet und besitzen gleiche Abstände zueinander, was deutlich aus Fig. 5 ersichtlich ist, d.h. sie sind in einem Wabenmuster angeordnet.

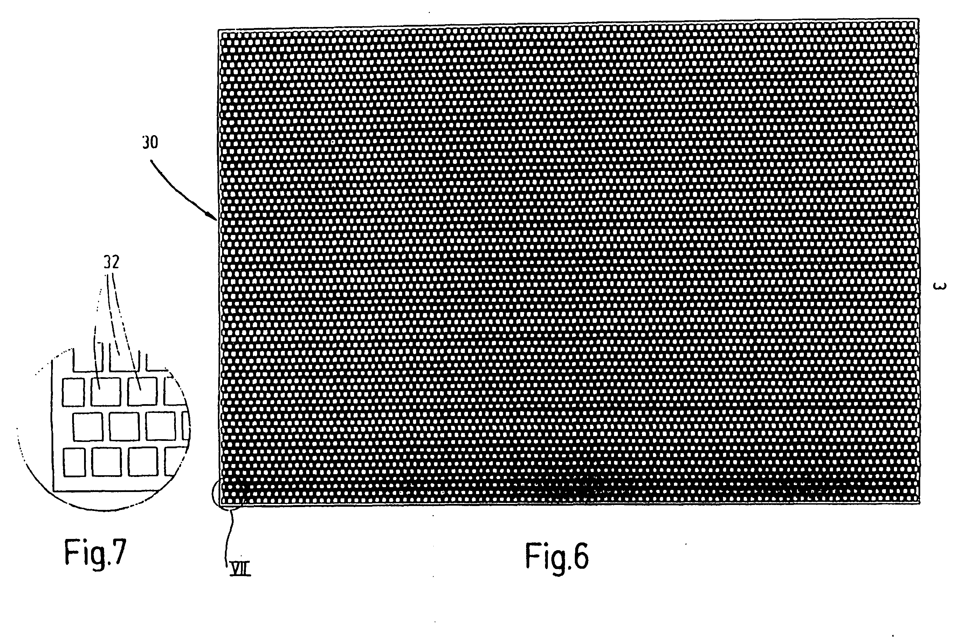

Die Fig. 6 und 7 zeigen eine Saugmatte 30, welche beim Ansaugen eines Werkstücks auf der Oberseite des Werkstücks aufliegt. Diese Saugmatte 30 besitzt eine Vielzahl von Saugkammern 32, welche im gleichen Rastermaß wie die Öffnungen 28 angeordnet sind. Jedoch weisen die Saugkammern 32 einen wesentlich größeren Querschnitt als die Öffnungen 28 auf, so dass diese nahezu keinen Strömungswiderstand bilden. Die Saugmatte 30 besteht aus einem elastischen Material, welches geschlossenzellig ist. Hierfür wird vorteilhafterweise ein geschäumter geschlossenzelliger Schaumstoff verwendet, der vorzugsweise einen abriebfesten Überzug aufweist.

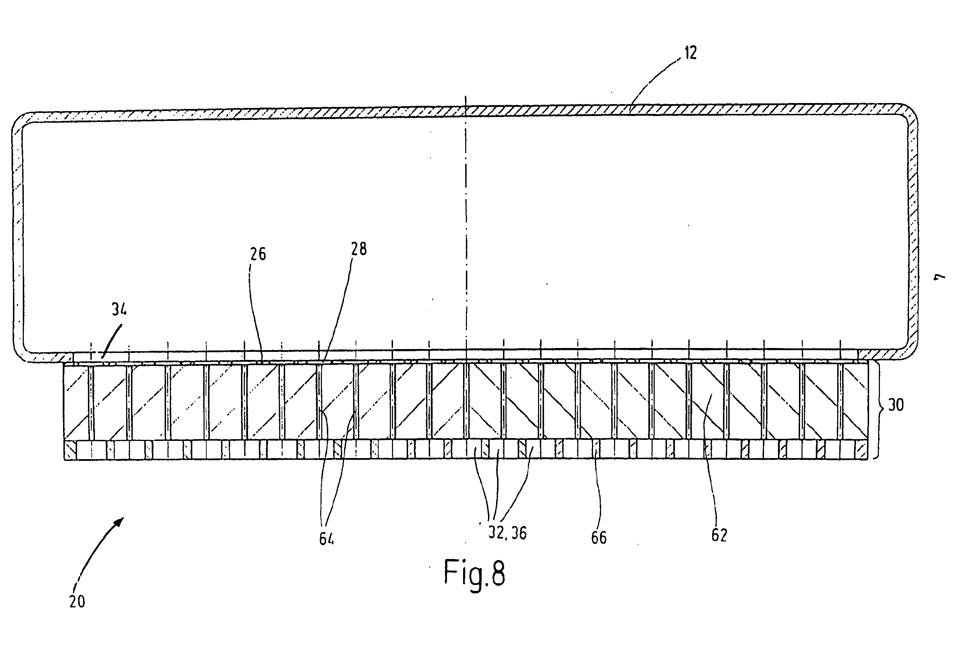

Die Fig. 8 zeigt die Ansaugeinheit 20, welche an der Unterseite des Saugkastens 12 befestigt ist. Die Ansaugeinheit 20 überdeckt dabei eine Saugöffnung 34 des Saugkastens 12 und schließt diese Saugöffnung 34 ab, so dass innerhalb des Saugkastens 12 ein Unterdruck erzeugt werden kann.

Die Ansaugeinheit 20 weist das Saugblech 26 auf, das relativ große Öffnungen 28 aufweist. An dieses Saugblech 26 schließt sich eine zweiteilige Saugmatte 30 an, deren erster Teil aus einer luftundurchlässigen Matte 62 besteht, welche zu den Öffnungen 28 fluchtende Kanäle 64 aufweist. Diese Kanäle 64 weisen einen relativ kleinen Strömungsquerschnitt auf und bilden dadurch den gewünschten Strömungswiderstand. An die Matte 62 schließt sich eine zweite Matte 66 aus geschlossenzelligem Gummi an, welche die Saugkammern 32 aufweist. Dieser Aufbau der Ansaugeinheit 20 ist relativ elastisch, so dass auch Gegenstände mit geringfügig unebener Oberfläche problemlos angesaugt werden können.

## Patentansprüche

1. Vakuumhandhabungsgerät mit einem ein Unterdruckreservoir bildenden Saugkasten (12), wenigstens einem Unterdruckgebläse (22), einer Handhabungseinrichtung (16) und einer den Saugkasten (12) in Richtung eines oder mehrerer anzusaugender Werkstücke verschließenden Ansaugeinheit (20), wobei die Ansaugeinheit (20) einen Mattenhalter mit Strömungsveränderungsmittel aufweist und der Mattenhalter in Richtung des bzw. der Werkstücke mit einer elastischen Saugmatte (30) belegt ist und die Saugmatte (30) mit Ansaugöffnungen (36) versehen ist, die mit den Strömungsveränderungsmitteln des Mattenhalters korrespondieren, wobei die Saugmatte (30) aus einem elastischen, dichten Material besteht, wobei der Mattenhalter als Saugblech (26) ausgebildet ist, und die Strömungsveränderungsmittel des Saugbleches (26) einen Strömungswiderstand aufweisen, **dadurch gekennzeichnet, dass** die Saugmatte (30) eine Matte (66) aufweist und zwischen der Matte (66) und dem Saugblech (26) wenigstens eine Zwischenmatte (62) dazwischengeschaltet ist, die ebenfalls aus einem elastischen Material besteht und mit Kanälen (64) versehen ist, die mit den Ansaugöffnungen (36) korrespondieren, dass die Ausmündungen der Ansaugöffnungen (36) der Matte (66) einen größeren Querschnitt aufweisen als die Kanäle (64) der Zwischenmatte (62) und dass die Strömungsveränderungsmittel einen größeren Querschnitt aufweisen als die Kanäle (64) der Zwischenmatte (62).

2. Vakuumhandhabungsgerät nach Anspruch 1, **dadurch gekennzeichnet, dass** die Ansaugeinheit (20) an ihrem Umfang einen zusätzlichen elastischen Rand aufweist.

3. Vakuumhandhabungsgerät nach Anspruch 2, **dadurch gekennzeichnet, dass** der Rand ein Schaumstoff oder eine Gummilippe ist, die über die freie Ebene der Ansaugeinheit (20) vorsteht.

4. Vakuumhandhabungsgerät nach Anspruch 2 oder 3, **dadurch gekennzeichnet, dass** der Rand mittels einer Klemmung oder einer Verklebung befestigt ist.

5. Vakuumhandhabungsgerät nach einem der vorhergehenden Ansprüche, **dadurch gekennzeichnet, dass** die Ansaugeinheit (20) an den Saugkasten (12) angeklebt oder an diesem festgeklemmt ist.

6. Vakuumhandhabungsgerät nach einem der vorhergehenden Ansprüche, **dadurch gekennzeichnet, dass** das Saugblech (26) topfförmig ausgebildet ist und einen umlaufenden Rand aufweist, über welchen das Saugblech (26) am Saugkasten (12) festgeklemmt ist.

7. Vakuumhandhabungsgerät nach einem der vorhergehenden Ansprüche, **dadurch gekennzeichnet, dass** das Saugblech (26) als Folie ausgebildet ist.

8. Vakuumhandhabungsgerät nach einem der vorhergehenden Ansprüche, **dadurch gekennzeichnet, dass** das Saugblech (26) auf seiner Rückseite mittels einer luftdurchlässigen elastischen Matte abgestützt ist.

9. Vakuumhandhabungsgerät nach einem der vorhergehenden Ansprüche, **dadurch gekennzeichnet, dass** die Matte (62) luftdicht versiegelte Seitenflächen aufweist.

10. Vakuumhandhabungsgerät nach einem der vorhergehenden Ansprüche, **dadurch gekennzeichnet, dass** sich die Ansaugöffnungen (36) in Richtung des bzw. der Werkstücke erweitern.

11. Vakuumhandhabungsgerät nach Anspruch 10, **dadurch gekennzeichnet, dass** die Ansaugquerschnitte sich tulpenförmig erweitern.

12. Vakuumhandhabungsgerät nach einem der vorhergehenden Ansprüche, **dadurch gekennzeichnet, dass** das elastische, dichte Material ein geschlossenzelliger Schaumstoff ist.

13. Vakuumhandhabungsgerät nach einem der vorhergehenden Ansprüche, **dadurch gekennzeichnet, dass** die Saugmatte (30) einen über das Saugblech (26) vorstehenden umlaufenden Rand aufweist.

14. Vakuumhandhabungsgerät nach einem der vorhergehenden Ansprüche, **dadurch gekennzeichnet, dass** das Saugblech (26) einen über die Saugmatte (30) vorstehenden umlaufenden Rand aufweist.

15. Vakuumhandhabungsgerät nach einem der vorhergehenden Ansprüche, **dadurch gekennzeichnet, dass** die Öffnungen (28) des Saugbleches (26) bzw. die Ansaugöffnungen (36) der Saugmatte (30) ein regelmäßiges Raster z.B. ein Wabenmuster aufweisen.

16. Vakuumhandhabungsgerät nach einem der vorhergehenden Ansprüche, **dadurch gekennzeichnet, dass** die Öffnungen (28) des Saugbleches (26) bzw. die Ansaugöffnungen (36) der Saugmatte (30) ein auf die Anordnung der Werkstücke abgestimmtes Raster aufweisen.

17. Vakuumhandhabungsgerät nach einem der vorhergehenden Ansprüche, **dadurch gekennzeichnet, dass** zwischen der Zwischenmatte (62) und der Matte (66) ein Sandwichblech angeordnet ist.

18. Vakuumhandhabungsgerät nach Anspruch 17, **dadurch gekennzeichnet, dass** das Sandwichblech sich nur über einen Teil der Querschnittsfläche der Zwischenmatte (62) erstreckt.

19. Vakuumhandhabungsgerät nach Anspruch 18, **dadurch gekennzeichnet, dass** das Sandwichblech streifenförmig ausgebildet und im Randbereich der Zwischenmatte (62) oder von Aussparungen angeordnet ist.

20. Vakuumhandhabungsgerät nach Anspruch 18 oder 19, **dadurch gekennzeichnet, dass** das Sandwichblech streifenförmig ausgebildet und die Streifen mit Abstand zueinander angeordnet sind.

21. Vakuumhandhabungsgerät nach einem der Ansprüche 1 bis 17, **dadurch gekennzeichnet, dass** das Sandwichblech sich über die gesamte Querschnittsfläche der Zwischenmatte (62) erstreckt.

22. Vakuumhandhabungsgerät nach einem der vorhergehenden Ansprüche, **dadurch gekennzeichnet, dass** mehrere Zwischenmatten (62) und/oder Sandwichbleche vorgesehen sind und die Ansaugeinheit (20) einen Sandwichaufbau besitzt.

23. Vakuumhandhabungsgerät nach einem der vorhergehenden Ansprüche, **dadurch gekennzeichnet, dass** die Strömungsveränderungsmittel eine Vielzahl von Öffnungen (28), von Strömungswiderständen und/oder von Strömungsventilen sind.

24. Vakuumhandhabungsgerät nach Anspruch 23, **dadurch gekennzeichnet, dass** die Strömungsventile einzeln oder in Gruppen ansteuerbar sind.

## Claims

1. Vacuum handling device having a suction chamber (12) forming a vacuum reservoir, at least one vacuum blower (22), a manually operated handling device (16) and a suction unit (20) closing off the suction chamber (20) toward one or several workpieces to be attracted by vacuum, where the suction unit (20) has a pad holder with flow changing means and the pad holder is covered by a flexible suction pad (30) toward the workpiece or workpieces and the suction pad (30) is furnished with suction openings (36) which correspond to the flow changing means of the pad holder, where the suction pad (30) consists of an especially flexible, dense material and the pad holder is made of a suction plate (26), and the means to change air flow of the suction plate (26) have a resistance to flow, **characterized in that** the suction pad (30) comprises a pad (66) and at least an intermediate pad (62) is interposed between the pad (66) and the suction plate (26), also consisting of a flexible material and furnished with through openings (64) which correspond to the suction openings (36), and that ends of the suction openings (36) of the pad (66) have a larger cross section than the through openings (64) of the intermediate pad (62) and that the flow changing means have a larger cross section than through openings (64) of the intermediate pad (62).

2. Vacuum handling device according to claim 1, **characterized in that** the suction unit (20) has an additional flexible lip around its circumference.

3. Vacuum handling device according to claim 2, **characterized in that** the edge is a foam or a rubber lip which projects beyond the free plane of the suction unit (20).

4. Vacuum handling device according to claim 2 or 3, **characterized in that** the edge is attached by means of clamping or bonding.

5. Vacuum handling device according to one of the preceding claims, **characterized in that** the suction unit (20) is bonded to the suction box (12) or is solidly clamped thereto.

6. Vacuum handling device according to one of the preceding claims, **characterized in that** the suction plate (26) has a dished configuration and has a circumferential edge by means of which the suction plate (26) is solidly clamped to the suction box (12).

7. Vacuum handling device according to one of the preceding claims, **characterized in that** the suction plate (26) is configured as a foil.

8. Vacuum handling device according to one of the preceding claims, **characterized in that** the suction plate (26) is supported on its back side by means of a flexible pad permeable to air.

9. Vacuum handling device according to one of the preceding claims, **characterized in that** the pad (62) has lateral surfaces which are sealed tight against air.

10. Vacuum handling device according to one of the preceding claims, **characterized in that** the cross sections of the suction openings (36) expand in the direction of the workpiece or workpieces.

11. Vacuum handling device according to claim 10, **characterized in that** the suction cross sections expand in the shape of a tulip.

12. Vacuum handling device according to one of the preceding claims, **characterized in that** the flexible, dense material is a closed-cell foam.

13. Vacuum handling device according to one of the preceding claims, **characterized in that** the suction pad (30) has a circumferential edge projecting beyond the suction plate (26).

14. Vacuum handling device according to one of the preceding claims, **characterized in that** the suction plate (26) has a circumferential edge projecting beyond the suction pad (30).

15. Vacuum handling device according to one of the preceding claims, **characterized in that** the openings (28) of the suction plate (26) or the suction openings (36) of the suction pad (30) respectively have a regular grid pattern, for example a honeycomb pattern.

16. Vacuum handling device according to one of the preceding claims, **characterized in that** the openings (28) of the suction plate (26) or the suction openings (36) of the suction pad (30) respectively have a grid pattern matching the arrangement of the workpieces.

17. Vacuum handling device according to one of the preceding claims, **characterized in that** a sandwich plate is located between the intermediate pad (62) and the pad (66).

18. Vacuum handling device according to claim 17, **characterized in that** the sandwich plate extends over only a part of the cross sectional area of the intermediate pad (62).

19. Vacuum handling device according to claim 18, **characterized in that** the sandwich plate is configured in the form of strips and is disposed in the edge area of the intermediate pad (62) or of apertures.

20. Vacuum handling device according to claim 18 and 19, **characterized in that** the sandwich plate is configured in the form of strips and the strips are disposed at a distance from each other.

21. Vacuum handling device according to one of the claims 1 to 17, **characterized in that** the sandwich plate extends over the entire cross sectional area of the intermediate pad (62).

22. Vacuum handling device according to one of the preceding claims, **characterized in that** several intermediate pads (62) and/or sandwich plates are furnished and the suction unit (20) is of sandwich construction.

23. Vacuum handling device according to one of the preceding claims, **characterized in that** the flow changing means are a plurality of openings (28), flow resistances and/or flow valves.

24. Vacuum handling device according to claim 23, **characterized in that** the flow valves can be actuated individually or in groups.

## Revendications

1. Appareil de manutention par le vide comportant un caisson d'aspiration (12) formant un réservoir de dépression, au moins une soufflerie à dépression (22), un dispositif de manutention (16) et une unité d'aspiration (20) fermant le caisson d'aspiration (12) dans la direction d'une ou de plusieurs pièces à aspirer, moyennant quoi l'unité d'aspiration (20) présente un support de natte comportant des moyens de modification du flux et le support de natte est garni en direction de la et/ou des pièce(s) d'une natte d'aspiration élastique (30), et la natte d'aspiration (30) est munie d'ouvertures d'aspiration (36) qui correspondent aux moyens de modification du flux du support de natte, moyennant quoi la natte d'aspiration (30) est constituée d'un matériau élastique dense, moyennant quoi le support de natte est réalisé sous la forme d'une tôle d'aspiration (26) et les moyens de modification du flux de la tôle d'aspiration (26) présentent une résistance au flux, **caractérisé en ce que** la natte d'aspiration (30) présente une natte (66) et **en ce qu'**entre la natte (66) et la tôle d'aspiration (26) est intercalée au moins une natte intermédiaire (62) qui est également constituée d'un matériau élastique et qui est munie de canaux (64) qui correspondent aux ouvertures d'aspiration (36), **en ce que** les débouchés des ouvertures d'aspiration (36) de la natte (66) présentent une section transversale plus grande que celle des canaux (64) de la natte intermédiaire (62), et **en ce que** les moyens de modification du flux présentent une section transversale plus grande que celle des canaux (64) de la natte intermédiaire (62).

2. Appareil de manutention par le vide selon la revendication 1, **caractérisé en ce que** l'unité d'aspiration (20) présente sur sa circonférence un bord élastique supplémentaire.

3. Appareil de manutention par le vide selon la revendication 2, **caractérisé en ce que** le bord est un matériau de mousse ou une lèvre en caoutchouc qui dépasse au-dessus du plan libre de l'unité d'aspiration (20).

4. Appareil de manutention par le vide selon la revendication 2 ou 3, **caractérisé en ce que** le bord est fixé par un serrage ou un collage.

5. Appareil de manutention par le vide selon une des revendications précédentes, **caractérisé en ce que** l'unité d'aspiration (20) est collée ou fixée par serrage au caisson d'aspiration (12).

6. Appareil de manutention par le vide selon une des revendications précédentes, **caractérisé en ce que** la tôle d'aspiration (26) est réalisée en forme de pot et présente un bord circulaire par l'intermédiaire duquel la tôle d'aspiration (26) est fixée par serrage au caisson d'aspiration (12).

7. Appareil de manutention par le vide selon une des revendications précédentes, **caractérisé en ce que** la tôle d'aspiration (26) est réalisée sous la forme d'une feuille.

8. Appareil de manutention par le vide selon une des revendications précédentes, **caractérisé en ce que** la tôle d'aspiration (26) est soutenue sur sa face arrière au moyen d'une natte élastique perméable à l'air.

9. Appareil de manutention par le vide selon une des revendications précédentes, **caractérisé en ce que** la natte (62) présente des surfaces latérales scellées de manière étanche à l'air.

10. Appareil de manutention par le vide selon une des revendications précédentes, **caractérisé en ce que** les ouvertures d'aspiration (36) s'élargissent en direction de la et/ou des pièce(s).

11. Appareil de manutention par le vide selon la revendication 10, **caractérisé en ce que** la section transversale d'aspiration s'élargit en forme de tulipe.

12. Appareil de manutention par le vide selon une des revendications précédentes, **caractérisé en ce que** le matériau élastique dense est une mousse à cellules fermées.

13. Appareil de manutention par le vide selon une des revendications précédentes, **caractérisé en ce que** la natte d'aspiration (30) présente un bord circulaire dépassant au-dessus de la tôle d'aspiration (26).

14. Appareil de manutention par le vide selon une des revendications précédentes, **caractérisé en ce que** la tôle d'aspiration (26) présente un bord circulaire dépassant au-dessus de la natte d'aspiration (30).

15. Appareil de manutention par le vide selon une des revendications précédentes, **caractérisé en ce que** les ouvertures (28) de la tôle d'aspiration (26) et/ou les ouvertures d'aspiration (36) de la natte d'aspiration (30) présentent un quadrillage régulier, par exemple un motif en nid d'abeilles.

16. Appareil de manutention par le vide selon une des revendications précédentes, **caractérisé en ce que** les ouvertures (28) de la tôle d'aspiration (26) et/ou les ouvertures d'aspiration (36) de la natte d'aspiration (30) présentent un quadrillage accordé sur l'agencement des pièces.

17. Appareil de manutention par le vide selon une des revendications précédentes, **caractérisé en ce qu'**une tôle sandwich est agencée entre la natte intermédiaire (62) et la natte (68).

18. Appareil de manutention par le vide selon la revendication 17, **caractérisé en ce que** la tôle sandwich ne s'étend que sur une partie de la surface de section transversale de la natte intermédiaire (62).

19. Appareil de manutention par le vide selon la revendication 18, **caractérisé en ce que** la tôle sandwich est réalisée en forme de bandes, et est agencée dans la zone de bordure de la natte intermédiaire (62) ou d'évidements.

20. Appareil de manutention selon la revendication 18 ou 19, **caractérisé en ce que** la tôle sandwich est réalisée en forme de bandes et **en ce que** les bandes sont agencées à distance les unes des autres.

21. Appareil de manutention selon une des revendications 1 à 17, **caractérisé en ce que** la tôle sandwich s'étend sur la totalité de la surface de section transversale de la natte intermédiaire (62).

22. Appareil de manutention selon une des revendications précédentes, **caractérisé en ce que** sont prévues plusieurs nattes intermédiaires (62) et/ou tôles sandwich, et **en ce que** l'unité d'aspiration (20) possède une structure en sandwich.

23. Appareil de manutention par le vide selon une des revendications précédentes, **caractérisé en ce que** les moyens de modification du flux sont une pluralité d'ouvertures (28), de résistances au flux et/ou ou de vannes de débit.

24. Appareil de manutention par le vide selon la revendication 23, **caractérisé en ce que** les vannes de débit peuvent être commandées individuellement ou par groupes.
